# EUROPEAN PATENT SPECIFICATION

(11) **EP 4 197 408 B1**
(45) Date of publication and mention of the grant of the patent: **25.09.2024**
(21) Application number: 21215385.2
(22) Date of filing: 17.12.2021
(51) Int. Cl.: A47J 37/06

(54) **COOKING DEVICE WITH ANTI-SPLASH GUARD**
KOCHVORRICHTUNG MIT SPRITZSCHUTZ
DISPOSITIF DE CUISSON AVEC PROTECTION ANTI-ÉCLABOUSSURE

(43) Date of publication of application: 21.06.2023
(73) Proprietor: Babyliss Faco SRL, 4020 Wandre (BE)
(72) Inventor: BOURGEOIS, Sophie, 4000 Liège (BE); GOERING, Alain, 4000 Liège (BE)
(74) Representative: AWA Benelux

(56) References cited:
- CN-U- 204 379 008
- DE-U1- 202005 001 459
- US-A- 5 227 597
- US-B2- 9 433 319

## Description

### Field of the invention

The present invention relates to a cooking device and, more particularly, to an electrical cooking device with limited heating power, comprising a low heat spreading zone as well as a removable and repositionable anti-splash guard.

### Background of the invention

A griddle (plancha) is used for cooking, baking, or roasting meats, bread, and vegetables. It has an upper surface, wherein the food is placed, heated evenly by heat transfer from the lower surface. The surface is generally a flat metal surface that can be heated by various heating sources such as gas or electricity.

The vast majority of griddles are composed of aluminium, cast iron, and various kinds of steel, which are heated directly or indirectly by flame or electrical elements to offer different cooking options for the users.

An anti-splash guard is a device partially or fully surrounding the griddle to prevent hot liquids or greases from spitting out of the cooking surface, which often happens when food is cooked at elevated temperatures. For user's convenience, stopping or at least reducing the splattering of hot liquids in the surrounding of the griddle reduces the cleaning time after use. Nevertheless, such anti-splash guards increase the height of the griddle, making them bulkier for limited storage space in a kitchen.

Griddles are usually only used in barbequing events, which happens occasionally. Therefore, their storage always requires a significant space, which is not convenient for many users, especially if their storage spaces are limited. Accordingly, there is a need to reduce the volume of griddles with splash guard.

According to the invention, the cooking device has limited heating power to reduce splashes. The maximal power should not exceed 2200 watts, preferably 2000 watts, most preferably 1800 watts. The griddle comprises a first heat spreading zone with low power (keep warm zone) and a second heat spreading zone with high power (cooking zone) to achieve these limitations while keeping a sufficient cooking capacity.

Utility model CN204379008U describes an electric roaster device provided with three detachable windshields connected to two flexible connecting sleeves to make it convenient for storage. However, assembling and disassembling these windshields before and after every use might damage their interlocking and make it difficult for the user to use them. In addition, solving the storage issue by providing multiple parts can make them easy to lose. Therefore, a solution to overcome these challenges more conveniently for the user is needed.

Document US 9 433 319 B2 also discloses a cooking device having a removable anti-splash guard.

### Summary of the Invention

The present invention discloses a cooking device comprising:
- a controlling unit;
- a cooking plate on which the food to be cooked is directly laid down;
- a removable and repositionable anti-splash guard comprising two positions, a working position surrounding the heating zones by edges rising towards the rear side of the cooking device and a storing position flipping upside down and sliding onto a side groove on the side contour of the cooking device.

According to preferred embodiments, the invention includes at least one or an appropriate combination of the following features:
- the cooking plate comprises two heat spreading zones, a first heat spreading zone with low power and a second heat spreading zone with high power;
- the total heating power of the cooking plate should not exceed 2200 watts, preferably 2000 watts, most preferably 1800 watts;
- the cooking plate is made of stainless steel;
- the two heating zones are controlled and operated separately;
- the cooking plate comprises a front grooved channel with a longitudinal inclination toward an opening in the controlling unit;
- the controlling unit is connected to the cooking plate, preferably below the cooking plate;
- the controlling unit comprises control knobs with light indicators;
- a high height grease drip tray is housed into the controlling unit, which slides to be removable and washable, and means collecting the greases and liquids via the opening in the controlling unit;
- the controlling unit comprises two recessed handles on two opposite sides;
- the controlling unit comprises an integrated cord storage on one side;
- the cooking plate and the controlling unit form a horizontal spacing from at least 3 sides hosting the edges of the anti-splash guard in the working and storing positions;
- the anti-splash guard is equipped with an anti-splash guard release button to maintain a fixed position for the anti-splash guard in the working and storing positions and allows the release of the anti-splash guard so as to swap from the working position to the storing position and vice versa;
- the cooking device is a griller or a griddle.

### Brief description of the figures

All figures represent entire or partial elements of the cooking device according to the present invention.
Figure 1 is a perspective front-right view with an anti-splash guard in a working position.
Figure 2 is an enlarged representative view taken from the front side of FIG. 1, depicting a control knob equipped with light indicators and a portion of the front grooved channel of a cooking plate.
Figure 3 is a representative back-right view with the anti-splash guard in a working position, depicting a recessed handle and a grease drip tray in an open position on the right side and an integrated cord storage on the rear side.
Figure 4 is a perspective front-left view with the anti-splash guard in the working position.
Figure 5 is a perspective front-right view depicting the anti-splash guard slid back partially from the working position.
Figure 6 is a perspective front-right view depicting the anti-splash guard slid back entirely from the working position, according to another embodiment of the present invention.
Figure 7 is a perspective front-right view depicting the anti-splash guard slid back entirely and flipped upside down, according to another embodiment of the present invention.
Figure 8 is a perspective front-right view depicting the anti-splash guard flipped upside down and partially slid ahead, according to another embodiment of the present invention.
Figure 9 is a perspective front-right view, depicting the anti-splash guard slid and positioned in the storing position, according to another embodiment of the present invention.
Figure 10 is a representative top view, depicting three possible distributions of two heat spreading zones, a first heat spreading zone with low power (keep warm zone) and a second heat spreading zone with high power (cooking zone).

### Detailed description of the invention

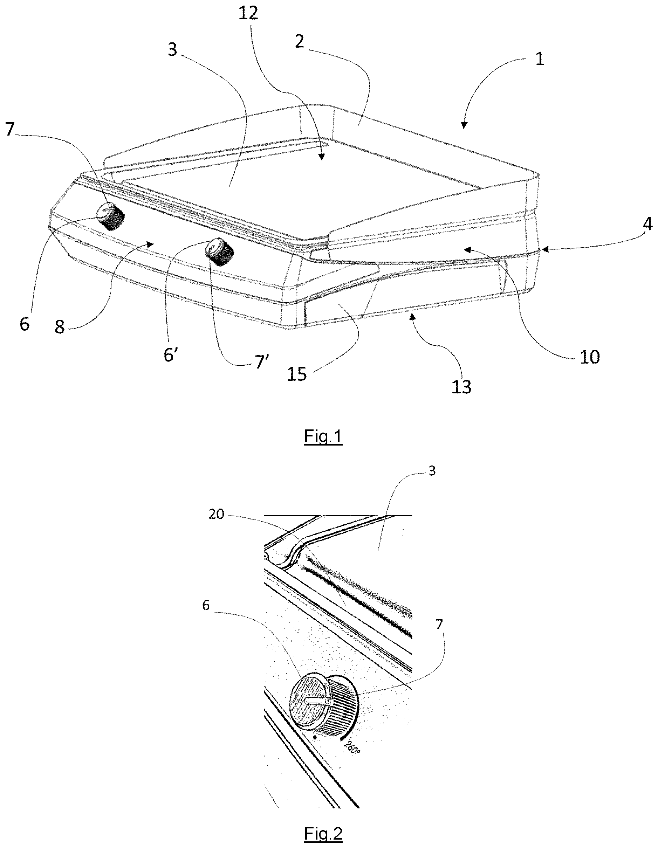

Referring to FIG. 1, a cooking device 1 of the present invention is shown. As shown therein, the cooking device 1 has a cooking plate 3, a controlling unit 4, and a removable and repositionable anti-splash guard 2. This kind of cooking device 1 is made for outdoor and indoor use and configured to be readily movable by a user such that the cooking device 1 is portable.

The cooking plate 3 is installed horizontally and on top of the controlling unit 4. It allows the user to directly lay down the food to be cooked. The cooking plate 3 may define a rectangular or square shape and can have various dimensions.

With reference to FIG. 1, the cooking device 1 includes a controlling unit 4 having two control knobs 6 and 6' equipped with light indicators 7 and 7' that allow the user to control each of the two heating zones separately. A zoom-in illustration of the control knob 6 with the light indicator 7 is shown in FIG. 2.

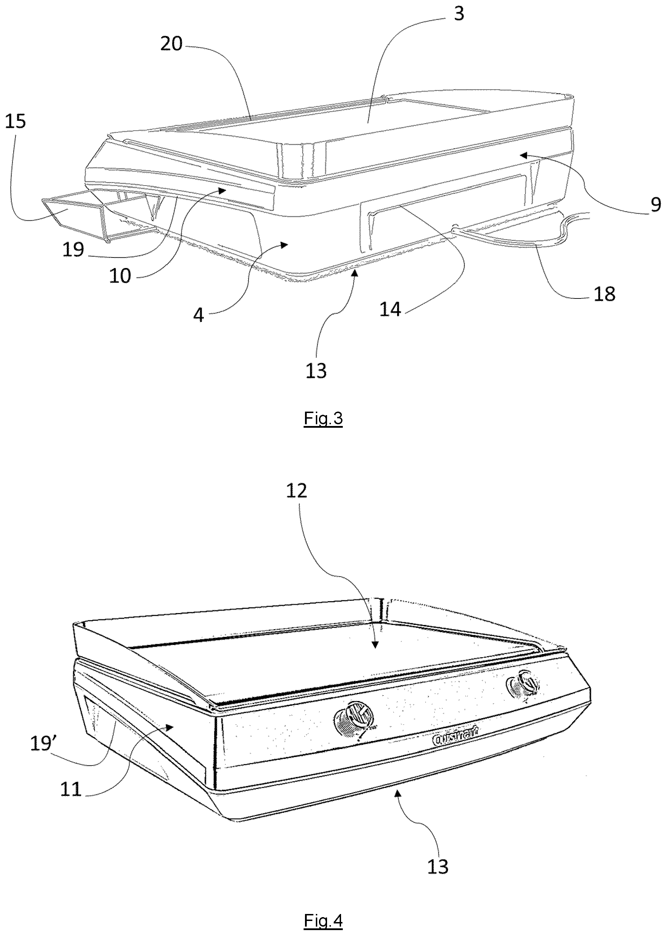

Referring to FIGS. 1, 3, and 4, the cooking device 1 may include a front side 8, a rear side 9, a right side 10, a left side 11, an upper side 12 and a bottom side 13. The front side 8 is the side where the user stands for operating the cooking device 1. The rear side 9 is opposite the front side 8 of the cooking device 1 and comprises the integrated cord storage 14 (see FIG. 3). The right side 10 is on the user's right side when standing in front of the front side 8 and is opposite the left side 11. The upper side 12 is opposite the bottom side 13 of the cooking device 1. In specific embodiments, the bottom side 13 of the cooking device 1 includes attachable or detachable legs but may also include anti-slip pads or surfaces, breakable wheels or rollers, or any stabilising system. Furthermore, the bottom side 13 may include height adjustable legs or pads for better stability of the cooking device 1 and for defining an inclination so that the greases and liquids released from food can more easily descend to the grease drip tray 15 shown in FIG. 3.

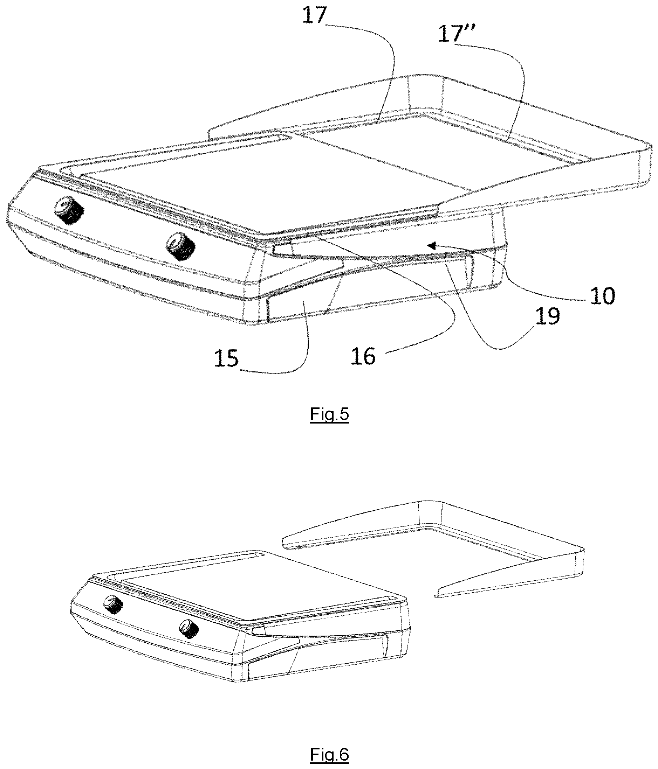

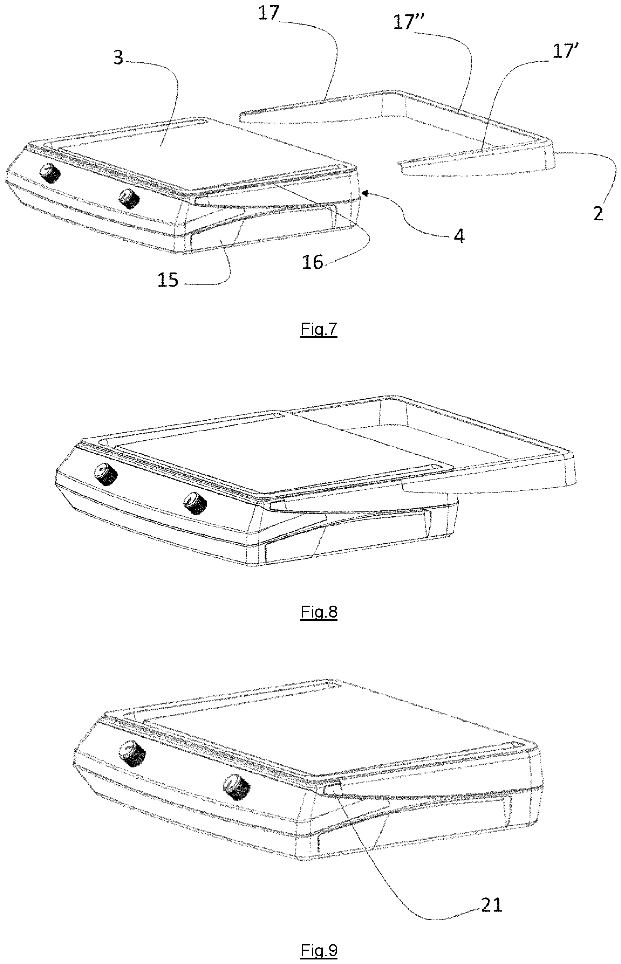

With further reference to FIGS. 1 and 3, the cooking device 1 includes a removable and repositionable anti-splash guard 2 that is selectively positioned on the working position and housed by its edges 17, 17', and 17" (see FIG. 7) in the side groove 16 (See FIG. 5) between the cooking plate 3 and the controlling unit 4. As shown therein, the anti-splash guard 2 has three vertical sidewalls rising toward the rear side 9 of the cooking device 1 and closely surrounding the cooking plate 3. The sidewalls of the anti-splash guard 2 are approximately 10cm high on the rear wall and start with a height of approximately 2cm on the left and right side, until they reach the exact height of the rear wall. The anti-splash guard 2 entirely slides back through the side groove 16 between the cooking plate 3 and the controlling unit 4 and can be removed. After use, the anti-splash guard 2 can be flipped upside down and slid ahead through said side groove 16 to be in the storing position (See FIG. 9). In this way, the user may decide to use various positions of the anti-splash guard 2 based on the desired application.

As will be readily appreciated, the anti-splash guard 2 prevents the liquid released from food items during cooking from splattering from the cooking plate 3 to the surrounding area of the cooking device 1. Accordingly, the splattering of liquids on the surrounding areas of the cooking device 1 is substantially reduced or eliminated. Notably, the anti-splash guard 2 is easily removable from the cooking device 1 through the side groove 16 and repositionable by flipping it upside down and sliding it onto the same side groove 16. In addition, flipping the sidewalls into the cooking device 1 will save significant space. Preferably, the anti-splash guard 2 is made from metal and has a non-stick coating to make the cleaning action easier for the user.

The working position of the anti-splash guard 2 is defined when the sidewalls are surrounding the cooking plate 3 rising towards the rear side of the cooking device 1. As shown in FIGS. 1, 3, and 4, the anti-splash guard 2 is positioned by sliding the edges 17, 17', and 17" from the rear side 9 to the front side 8 of the cooking device 1 through the sides groove 16 formed by the vertical gap between the controlling unit 4 and the cooking plate 3.

The storing position of the anti-splash guard 2 is defined when the sidewalls surrounding the cooking plate 1 falls towards the rear side 9 of the cooking device 1. As shown in FIGS. 8 and 9, the anti-splash guard 2 is positioned by sliding the edges 17, 17', and 17" from the rear side 9 to the front side 8 of the cooking device 1 through the side groove 16 formed by the vertical gap between the controlling unit 4 and the cooking plate 3. Notably, the anti-splash guard 2 in the storing position is flipped upside down from the working position.

With reference to FIGS. 1, 5, 6, 7, 8, and 9, the steps for positioning the anti-splash guard 2 from the working position to the storing position are illustrated respectively. FIG. 1 shows the anti-splash guard 2 in working position. Then, FIG. 5 shows the anti-splash guard 2 sliding back partially toward the rear side 9 of the cooking device 1 before its complete separation in FIG. 6. Later, the anti-splash guard 2 is flipped upside down and prepared to have its edges 17, 17', and 17" slid into the vertical side groove 16 positioned between the controlling unit 4 and the cooking plate 3 from the rear side 9 to the front side 8 of the cooking device 1, as shown in FIG. 7. The position of the anti-splash guard 2 in FIG. 8 is similar to the position shown in FIG. 5, except that the anti-splash guard 2 is flipped upside down. Lastly, the FIG. 9 shows the end sliding position of the anti-splash guard 2, which represents the storing position. The sidewalls partially cover the sides of the controlling unit 4, reducing the necessary storage volume.

The anti-splash guard 2 may be controlled by a release button 21. The release button 21 maintains a fixed position of the anti-splash guard 2 in both positions, namely the working position and the storing position. The release button 21 can also function to unlock the anti-splash guard 2 so that a user can slide and flip the anti-splash guard 2 from the working position to the storing position and vice versa. In particular, actuating the release button 21 unlocks the engagement of the edges 17, 17', and 17" of the anti-splash guard 2 with the side groove 16, thereby enabling a user to change the position of the anti-splash guard 2 from the working position to the storing position and vice versa. Additionally, the release button 21 can also lock the engagement of the edges 17, 17', and 17" of the anti-splash guard 2 with the side groove 16, enabling the fixation of the anti-splash guard in the desired position.

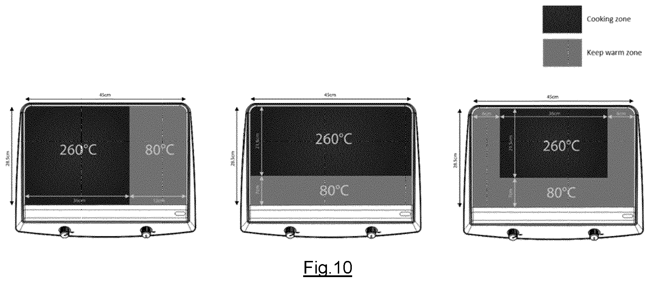

As shown in FIG. 10, the upper side 12 of the cooking device 1 may include a cooking plate 3 with various heat spreading zones. A first heat spreading zone with low power and a second heat spreading zone with high power may be distributed in different ways depending on the user's need. For example, the second heat spreading zone may define the cooking zone with a temperature up to around 300°C, preferably 260°C, and the first heat spreading zone may define the keep warm zone at a temperature lower than the temperature of the second heat spreading zone, to around 120°C and preferably 80°C. Furthermore, the main objective is to use the same mechanical structure and the same cooking plate for different geographical areas with different network voltages and available power limits. The cooking plate 3 is made with a material with a lower conductivity than aluminium, preferably stainless steel, which requires a lower power density to reach a minimum cooking temperature of more than 200°C. This power may be achieved by allocating all or part of the total surface of the cooking plate 3 without physical delimitation by using resistive heating elements having different geometries plated under the cooking plate 3, instead of inductive heating elements, taking advantage of the horizontal non-conductivity in the thickness of the cooking plate 3 to make the different zones coexist. The total heating power of the cooking device 1 does not exceed 2200 watts, preferably 2000 watts, more preferably 1800 watts. Using two heat spreading zones makes it possible to reach high temperatures in a specific zone without exceeding the heating power and keeps the other zone at a lower heating temperature for other purposes, such as keeping the food warm. Apart from the simple separation of the two heat spreading zones controlled separately, the first heat spreading zone with low power and a second heat spreading zone with high power may be separated horizontally or vertically, but one zone may also surround one another partially or entirely. In this manner, the user may decide to use various geographical distributions of the two heat spreading zones based on the desired application.

FIG. 3 illustrates an integrated cord storage 14 located on the rear side 9 of the cooking device 1. The electrical cord 18 used to supply the cooking device 1 with the needed power might be wound around it, making it convenient for a user to store the electrical cord 18 after use or during the transport of the cooking device 1.

With further reference to FIG. 3, the cooking device 1 includes a recessed handle 19 that allows a user to lift and transport the cooking device 1 easily and safely without being burnt or getting dirty. Another recessed area 19' is also present on the opposite side of the cooking device 1 shown in FIG. 4.

With further reference to FIG. 3, the right side 10 may also include a high height grease drip tray 15 that is removable and dishwasher safe. As shown therein, the grease drip tray 15 may have a rectangular shape and might have transparent sidewalls to allow a user to decide when it needs to be emptied from the collected liquids. The grease drip tray 15 is housed inside the controlling unit 4 and located below the opening channel (not shown) of the controlling unit 4, linked to the front grooved channel 20 located in the cooking plate 3. When greases and liquids are released from the cooked food, they fall into the front grooved channel 20, which has a longitudinal inclination toward the opening channel in the controlling unit 4. The greases and liquids pass via the front grooved channel 20 to the opening channel, dripping down in the grease drip tray 15.

## Claims

1. A cooking device (1) comprising:
- a controlling unit (4);
- a cooking plate (3) on which the food to be cooked is directly laid down;
- a removable and repositionable anti-splash guard (2) comprising two positions, a working position surrounding the heating zones by edges rising towards the rear side (9) of the cooking device (1) and a storing position
**characterized in that**, in the storing position, the anti-splash guard (2) is flipped upside down and is slid onto a side groove (16) on the side contour of the cooking device (1).

2. The cooking device (1) of claim 1, wherein the cooking plate (3) comprises two heat spreading zones, a first heat spreading zone with low power and a second heat spreading zone with high power.

3. The cooking device (1) of claim 1 or 2, wherein the total heating power of the cooking plate (3) should not exceed 2200 watts, preferably 2000 watts, most preferably 1800 watts.

4. The cooking device (1) according to any of the preceding claims, wherein the cooking plate (3) is made of stainless steel.

5. The cooking device (1) according to any of the preceding claims, wherein the two heating zones are controlled and operated separately.

6. The cooking device (1) according to any of the preceding claims, wherein the cooking plate (3) comprises a front grooved channel (20) with a longitudinal inclination toward an opening in the controlling unit (4).

7. The cooking device (1) according to any of the preceding claims, wherein the controlling unit (4) is connected to the cooking plate (3), preferably below the cooking plate (4).

8. The cooking device (1) according to any of the preceding claims, wherein the controlling unit (4) comprises control knobs (6) and (6') with light indicators (7) and (7').

9. The cooking device (1) according to any of the preceding claims, wherein a high height grease drip tray (15) is housed into the controlling unit (4), which slides to be removable and washable, and means collecting the greases and liquids via the opening in the controlling unit (4).

10. The cooking device (1) according to any of the preceding claims, wherein the controlling unit (4) comprises two recessed handles (19) and (19') at two opposite sides.

11. The cooking device (1) of claim 7, wherein the controlling unit (4) comprises an integrated cord storage (14) on one side.

12. The cooking device (1) according to any of the preceding claims, wherein the cooking plate (3) and the controlling unit (4) form a horizontal spacing from at least 3 sides hosting the edges (17), (17'), and (17") of the anti-splash guard (2) in the working and storing positions.

13. The cooking device (1) according any of the previous claims, wherein the anti-splash guard (2) is equipped with an anti-splash guard release button (21) to maintain a fixed position for the anti-splash guard (4) in the working and storing positions and allows the release of the anti-splash guard (2) so as to swap from the working position to the storing position and vice versa.

14. The cooking device (1) according to any of the preceding claims, wherein the cooking device (1) is a griller or a griddle.

## Patentansprüche

1. Garvorrichtung (1), Folgendes umfassend:
- eine Steuereinheit (4),
- eine Garplatte (3), auf die das zu garende Lebensmittel direkt aufgelegt wird,
- einen abnehmbaren und neupositionierbaren Spritzschutz (2), der zwei Positionen umfasst, eine Arbeitsposition, welche die Heizzonen durch Ränder umgibt, die hin zur Rückseite (9) der Garvorrichtung (1) ansteigen, und eine Aufbewahrungsposition,
**dadurch gekennzeichnet, dass** in der Aufbewahrungsposition die Oberseite des Spritzschutzes (2) nach unten gedreht wird und auf eine seitliche Rille (16) an der Seitenkontur der Garvorrichtung (1) geschoben wird.

2. Garvorrichtung (1) nach Anspruch 1, wobei die Garplatte (3) zwei Wärmeausbreitungszonen umfasst, eine erste Wärmeausbreitungszone mit geringer Leistung und eine zweite Wärmeausbreitungszone mit hoher Leistung.

3. Garvorrichtung (1) nach Anspruch 1 oder 2, wobei die Gesamtheizleistung der Garplatte (3) 2200 W nicht übersteigen sollte, vorzugsweise 2000 W, am meisten bevorzugt 1800 W.

4. Garvorrichtung (1) nach einem der vorhergehenden Ansprüche, wobei die Garplatte (3) aus Edelstahl besteht.

5. Garvorrichtung (1) nach einem der vorhergehenden Ansprüche, wobei die zwei Heizzonen separat gesteuert und betrieben werden.

6. Garvorrichtung (1) nach einem der vorhergehenden Ansprüche, wobei die Garplatte (3) einen vorderen gerillten Kanal (20) mit einer längsgerichteten Schräge hin zu einer Öffnung in der Steuereinheit (4) umfasst.

7. Garvorrichtung (1) nach einem der vorhergehenden Ansprüche, wobei die Steuereinheit (4) mit der Garplatte (3) verbunden ist, vorzugsweise unter der Garplatte (4).

8. Garvorrichtung (1) nach einem der vorhergehenden Ansprüche, wobei die Steuereinheit (4) Steuerknöpfe (6) und (6`) mit Lichtanzeigen (7) und (7`) umfasst.

9. Garvorrichtung (1) nach einem der vorhergehenden Ansprüche, wobei in der Steuereinheit (4) eine Fettauffangwanne (15) mit großer Höhe untergebracht ist, die gleitet, um entnehmbar und abwaschbar zu sein, und Mittel zum Sammeln der Fette und Flüssigkeiten über die Öffnung in der Steuereinheit (4).

10. Garvorrichtung (1) nach einem der vorhergehenden Ansprüche, wobei die Steuereinheit (4) zwei eingelassene Griffe (19) und (19') an zwei gegenüberliegenden Seiten umfasst.

11. Garvorrichtung (1) nach Anspruch 7, wobei die Steuereinheit (4) an einer Seite ein integriertes Kabelstaufach (14) umfasst.

12. Garvorrichtung (1) nach einem der vorhergehenden Ansprüche, wobei die Garplatte (3) und die Steuereinheit (4) aus mindestens drei Seiten einen horizontalen Raum bilden, welcher die Ränder (17), (17') und (17") des Spritzschutzes (2) in der Arbeits- und der Aufbewahrungsposition aufnimmt.

13. Garvorrichtung (1) nach einem der vorhergehenden Ansprüche, wobei der Spritzschutz (2) mit einem Spritzschutz-Freigabeknopf (21) ausgestattet ist, um eine feste Position für den Spritzschutz (4) in der Arbeits- und der Aufbewahrungsposition aufrechtzuerhalten und die Freigabe des Spritzschutzes (2) zu ermöglichen, so dass von der Arbeitsposition in die Aufbewahrungsposition gewechselt wird und umgekehrt.

14. Garvorrichtung (1) nach einem der vorhergehenden Ansprüche, wobei die Garvorrichtung (1) ein Grill oder eine Grillplatte ist.

## Revendications

1. Dispositif de cuisson (1) comprenant :
- une unité de commande (4) ;
- une plaque de cuisson (3) sur laquelle sont directement déposés les aliments à cuire ;
- une protection anti-éclaboussures (2) amovible et repositionnable comprenant deux positions, une position de travail entourant les zones de chauffe par des bords remontant vers le côté arrière (9) du dispositif de cuisson (1) et une position de rangement,
**caractérisé en ce que**, dans la position de rangement, la protection anti-éclaboussures (2) est renversée et glisse sur une rainure latérale (16) située sur le contour latéral du dispositif de cuisson (1).

2. Dispositif de cuisson (1) selon la revendication 1, dans lequel la plaque de cuisson (3) comprend deux zones de diffusion de chaleur, une première zone de diffusion de chaleur de faible puissance et une seconde zone de diffusion de chaleur de forte puissance.

3. Dispositif de cuisson (1) selon la revendication 1 ou 2, dans lequel la puissance de chauffe totale de la plaque de cuisson (3) ne doit pas dépasser 2200 watts, de préférence 2000 watts, de manière particulièrement préférée 1800 watts.

4. Dispositif de cuisson (1) selon l'une quelconque des revendications précédentes, dans lequel la plaque de cuisson (3) est en acier inoxydable.

5. Dispositif de cuisson (1) selon l'une quelconque des revendications précédentes, dans lequel les deux zones de chauffe sont commandées et utilisées séparément.

6. Dispositif de cuisson (1) selon l'une quelconque des revendications précédentes, dans lequel la plaque de cuisson (3) comprend un canal rainuré avant (20) présentant une inclinaison longitudinale vers une ouverture dans l'unité de commande (4).

7. Dispositif de cuisson (1) selon l'une quelconque des revendications précédentes, dans lequel l'unité de commande (4) est reliée à la plaque de cuisson (3), de préférence en dessous de la plaque de cuisson (4).

8. Dispositif de cuisson (1) selon l'une quelconque des revendications précédentes, dans lequel l'unité de commande (4) comprend des boutons de commande (6) et (6') avec des voyants lumineux (7) et (7').

9. Dispositif de cuisson (1) selon l'une quelconque des revendications précédentes, dans lequel un bac collecteur de graisse (15) à bords hauts est logé dans l'unité de commande (4) et glisse pour pouvoir être retiré et lavé, ainsi que des moyens pour récupérer les graisses et les liquides par le biais de l'ouverture dans l'unité de commande (4).

10. Dispositif de cuisson (1) selon l'une quelconque des revendications précédentes, dans lequel l'unité de commande (4) comprend deux poignées encastrées (19) et (19') au niveau de deux côtés opposés.

11. Dispositif de cuisson (1) selon la revendication 7, dans lequel l'unité de commande (4) comprend un rangement de cordon intégré (14) sur un côté.

12. Dispositif de cuisson (1) selon l'une quelconque des revendications précédentes, dans lequel la plaque de cuisson (3) et l'unité de commande (4) forment un espacement horizontal sur au moins 3 côtés qui reçoit les bords (17), (17') et (17") de la protection anti-éclaboussures (2) dans les positions de travail et de rangement.

13. Dispositif de cuisson (1) selon l'une quelconque des revendications précédentes, dans lequel la protection anti-éclaboussures (2) est équipée d'un bouton de libération (21) de la protection anti-éclaboussures (2) pour la maintenir en position fixe dans les positions de travail et de rangement et pour permettre sa libération afin de la faire passer de la position de travail à la position de rangement et inversement.

14. Dispositif de cuisson (1) selon l'une quelconque des revendications précédentes, dans lequel le dispositif de cuisson (1) est un grill ou une plaque chauffante.
